# EUROPÄISCHE PATENTSCHRIFT

(11) **EP 2 681 524 B1**
(45) Veröffentlichungstag und Bekanntmachung des Hinweises auf die Patenterteilung: **09.08.2017**
(21) Anmeldenummer: 12716202.2
(22) Anmeldetag: 28.02.2012
(51) Int. Cl.: G01K 1/14

(54) **HOCHTEMPERATURSENSOR UND EINE VORRICHTUNG ZUM HALTEN UND POSITIONIEREN DES SENSORELEMENTES**
HIGH-TEMPERATURE SENSOR AND A DEVICE FOR HOLDING AND POSITIONING THE SENSOR ELEMENT
CAPTEUR HAUTE TEMPÉRATURE ET UN DISPOSITIF DE RETENUE ET DE POSITIONNEMENT DE L'ÉLÉMENT CAPTEUR

(30) Priorität: 01.03.2011 DE 102011012684
(43) Veröffentlichungstag der Anmeldung: 08.01.2014
(73) Patentinhaber: Hella KGaA Hueck & Co, 59552 Lippstadt (DE)
(72) Erfinder: NIEMANN, Thomas, 27753 Delmenhorst (DE); PALLOKS, Jürgen, 26655 Westerstede (DE)
(74) Vertreter: Siekmann, Gunnar
(86) Internationale Anmeldenummer: PCT/DE2012/000187
(87) Internationale Veröffentlichungsnummer: WO 2012/116682

(56) Entgegenhaltungen:
- DE-A1-102007 024 865
- US-A- 5 048 974

## Beschreibung

Die Erfindung betrifft einen Hochtemperatursensor mit einem Sensorelement und einer Vorrichtung zum Halten und Positionieren des Sensorelementes an seinem Einsatzort, insbesondere für automobile Anwendungen, mit einem Halteteil mit einer taschenartigen Einformung, in der das Sensorelement bündig aufgenommen ist und wobei die Einformung, bezogen auf die Längserstreckung des Halteteils, einseitig versetzt im Halteteil angeordnet ist und mit einem umgebenden Gehäuse.

Bei bekannten Hochtemperatursensoren sind Kontaktdrähte zum Einsatzort eines Sensorelementes geführt. Der Einsatzort kann sich zum Beispiel in einem Abgasstrang einer Brennkraftmaschine befinden, wie es in der DE 10 2007 021 763 A1 angegeben ist. Dafür sind nicht nur das Sensorelement, sondern auch seine Kontaktdrähte und sonstige, zum Beispiel für seine Montage an beziehungsweise in einem Abgaskrümmer notwendigen Metallteile derart auszuführen, dass sowohl die Einzelelemente des Hochtemperatursensors als auch deren Kontaktbereiche den gleichen Ausdehnungen über einen Temperaturbereich von zum Beispiel -40° Celsius bis 1050° Celsius während des gesamten Automobillebens mit enormen Schwingungsbelastungen wiederstehen können.

Des Weiteren ist aus der US 5 048 974 A eine Temperaturmessvorrichtung mit einem Meldekontakt bekannt. Die Vorrichtung umfasst ein Gehäuse mit einem thermoresistiven Element, das auf einem Halter aus einem elektrisch isolierenden Material angeordnet ist. Der Halter weist eine plane und eine semizylindrische Seite auf. Das vorzugsweise scheibenförmige thermoresistive Element wird in eine zylindrische Kammer des Halters eingefügt, wobei die Kammer Öffnungen in Richtung der planen und Richtung der semizylindrischen Seite aufweist. In der Kammer wird das thermoresistive Element zwischen einem Kontaktbolzen und einem Federelement gehalten. Das Gehäuse wird mit einer Kappe verschlossen, wobei die Kappe auch als Träger für die Kontaktierungsstifte der Temperaturmessvorrichtung dient.

Die DE 10 2007 024 865 A1 beschreibt eine Vorrichtung zur Bestimmung wenigstens eines Parameters eines fluiden Mediums. Die Vorrichtung umfasst dabei einen Sensorchip und eine Ansteuer- und Auswerteelektronik mit einem Schaltungsträger. Der Sensorchip ist auf einem Chipträger angeordnet, wobei der Chipträger einen mit dem Schaltungsträger einstückig ausgebildeten Vorsprung des Schaltungsträgers umfasst und wobei der Sensorchip an dem Vorsprung fixiert ist. Der Chipträger weist einen Rahmen auf, der auf dem Vorsprung aufgebracht ist und den Sensorchip teilweise umschließt.

Die vorstehend angegebene Problematik löst die Erfindung durch die Merkmale des Patentanspruchs 1. Weiterbildungen der erfindungsgemäßen Lösung sowie vorteilhafte beziehungsweise bevorzugte Ausgestaltungen ergeben sich aus den Ansprüchen 2 bis 7. In den Ansprüchen 8 und 9 sind weitere Aspekte der Erfindung beansprucht.
Der Hochtemperatursensor mit einem Sensorelement und einer Vorrichtung zum Halten und Positionieren des Sensorelements an seinem Einsatzort, insbesondere für automobile Anwendungen, mit einem Halteteil mit einer taschenartigen Einformung, in der das Sensorelement bündig aufgenommen ist und wobei die Einformung, bezogen auf die Längserstreckung des Halteteils einseitig versetzt im Halteteil angeordnet ist und mit einem umgebenden Gehäuse, zeichnet sich dadurch aus, dass der Hochtemperatursensor Kontaktdrähte und mindestens einen Distanzhaltekörper aufweist, dass die beiderseits der Einformung verbleibenden Teilabschnitte des Halteteils der Versetzung entsprechende Abmessungen aufweisen und als Distanzhalter ausgebildet sind, für die Vorgabe des Abstandes zwischen dem Sensorelement und einem Wandbauteil einer den Einsatzort des Hochtemperatursensors begrenzenden Wand einerseits und einem Distanzhaltekörper einer Reihe von Distanzhaltekörpern andererseits, welche von den Kontaktdrähten gehalten sind und dass aus dem mit einem Sensorelement ausgerüsteten Halteteil, wobei das Sensorelement mit den Kontaktdrähten verbunden ist, und jeweils zugeordneten Distanzhaltekörpern, die von den Kontaktdrähten gehalten sind, eine Einbaugruppe gebildet ist, die in ein umgebendes Gehäuse eingefügt ist.

Das Sensorelement ist bevorzugt ein elektronisches Bauteil, das im Wesentlichen ähnlich einer bestückten Platine ist. Das Halteteil erfüllt den Zweck, ein solches Sensorelement, welches zur Feststellung beziehungsweise Messung einer Temperatur dient, in der richtigen Position relativ zum Einsatzort zu halten. Der Einsatzort ist zum Beispiel die Stelle, an der es eine dort herrschende Temperatur zu ermitteln gilt. Dazu weist das Halteteil eine taschenartige Einformung auf, in die das Sensorelement bündig einlegbar ist. Die Abmessungen der Einformung sind derart, dass das Sensorelement verhältnismäßig stramm und damit spielfrei in der Einformung sitzt. Mit besonderem Vorteil ist die Einformung, bezogen auf die Längserstreckung des Halteteils, einseitig versetzt im Halteteil angeordnet. Durch diese Maßnahme der einseitigen Versetzung steht ein Ende des Halteteils weiter über die Einformung vor als der jeweils gegenüberliegende Teilabschnitt. Die beiderseits der Einformung verbliebenden Teilabschnitte sind somit ungleich lang und können somit vorteilhaft als Distanzhalter dienen. Mit solchen Distanzhaltern kann ein vorgegebener Abstand zwischen dem Sensorelement und einem Wandbauteil einer dem Einsatzort des Hochtemperatursensors begrenzenden Wand, beispielsweise der Wand eines Abgaskanals, eingehalten werden, womit die Positionierung während der Montage wesentlich erleichtert ist.

Bevorzugt ist es, durch den jeweils kürzeren Teilabschnitt des Halteteils den Abstand des Sensorelements zum Messort im Abgasstrang vorzugeben, wobei der jeweils längere Teilabschnitt am gegenüberliegenden Ende den Abstand zu einem Distanzhaltekörper einer Reihe von Distanzhaltekörpern vorgibt, welche dazu dienen, die Kontaktdrähte von zum Beispiel metallischen Wänden, die den Einsatzort umgeben, zu beabstanden. Aus dem mit einem Sensorelement ausgerüsteten Halteelement und jeweils zugeordneten Distanzkörpern ist mit Vorteil eine Einbaugruppe gebildet, die in ein umgebendes Gehäuse eingefügt ist.

Das Halteteil weist mit Vorteil die Form eines Quaders auf, wobei die Einformung eine der Quaderform entsprechende Ausklinkung in einer der Längsseitenflächen des Quaders ist. Selbstverständlich kann das Halteteil auch andere Formen aufweisen, jedoch hat sich gezeigt, dass die Form eines Quaders relativ einfach herstellbar ist.

Das Sensorelement weist abgehende parallele Anschlussdrähte auf, deren freie Enden mit dem jeweils zugeordneten Kontaktdraht verbunden sind. Dabei ist die Anordnung derart getroffen, dass der Abstand zwischen den Anschlussdrähten größer ist als die Dicke des Halteteils. Dadurch können die Anschlussdrähte entweder zum kürzeren Teilabschnitt hin, oder zum längeren Teilabschnitt nach hinten an den entsprechenden Außenflächen des Halteteils vorbeigreifen. Die Kontaktdrähte können ebenfalls am Halteteil vorbei bis an die Anschlussdrähte des Sensorelements geführt werden, um eine gegenseitige elektrisch leitfähige Verbindung herzustellen.

Bei einer bevorzugten Ausführung weist das Gehäuse die Form einer Hülse auf, die an einem Hülsenende geschlossen ist.

Die Hülse besteht vorzugsweise aus einer Polymerkeramik.

Das Gehäuse kann so mit einem Abgaskanal kombiniert werden, dass das geschlossene Hülsenende dem im Abgaskanal strömenden Abgas ausgesetzt ist. Die Einbaugruppe mit dem Sensorelement ist dabei mit Vorteil derart in der Hülse aufgenommen, dass sich das Sensorelement geschützt in der Nähe des geschlossenen Hülsenendes, und, durch die verschieden langen Teilabschnitte des Halteelements für das Sensorelement, mit Vorteil in einem vorbestimmten Abstand vom Hülsenende positioniert und gehalten ist.

Da der Werkstoff für das Halteteil eine Polymerkeramik ist, und auch die Hülse aus Polymerkeramik hergestellt sein kann, sind die wärmetechnischen Anforderungen an die Bauteile des Hochtemperatursensors erfüllt. Polymerkeramik hat außerdem den Vorteil, dass sich daraus Bauteile im Spritzgussverfahren herstellen lassen. Somit kann bei der Erfindung der Vorteil genutzt werden, Halteteil, Distanzkörper und Gehäuse als Spritzgussteile aus Polymerkeramik auszubilden. Dabei ist es eine bevorzugte Maßnahme, das Halteteil aus dem Angusskanal für einen in der jeweiligen Einbaugruppe benachbart angeordneten Distanzkörper zu bilden. Dies hat den Vorteil, dass kein besonderes Werkzeug zur Herstellung der benötigten Halteteile erforderlich ist. Es reicht aus, den Anguss einer Spritzgussform auszubilden, dass nach der Entformung die gespritzten Halteteile aus der Form in dem Bereich des Angusskanals entnehmbar sind.

Selbstverständlich wäre es auch möglich, eine Spritzgussform mit aus vorgefertigten Einbaugruppen bestehenden Einlegeteilen zu bestücken, die dann entsprechend mit Polymerkeramik umspritzt werden.

Es kann dadurch eine komplette Einbaugruppe, die aus Halteteil, Distanzkörper und Sensorelement, das bereits über seine Anschlussdrähte mit den einzulegenden Kontaktdrähten verbunden ist, besteht, im Spritzguss hergestellt werden.

Ein weiterer Aspekt der Erfindung besteht in der Bereitstellung eines Halteteils mit einer taschenartigen Einformung zur Aufnahme eines Sensorelements für einen oben beschriebenen Hochtemperatursensors. Die Erfindung beansprucht ebenfalls Schutz für die Bereitstellung eines Abgasstrangs für einen Motor, insbesondere einen Verbrennungsmotor eines Automobils, mit einem oben beschriebenen Hochtemperatursensor, wobei der Hochtemperatursensor mit seinem Hülsenende durch einen Durchbruch der Wand in einen im Abgasstrang gebildeten Abgaskanal eingeschoben ist, wobei das im Hochtemperatursensor vorgesehene Halteteil mit dem darin aufgenommenen Sensorelement an definierter Position in dem vorderen Teil des Hochtemperatursensors angeordnet ist, der in den Abgaskanal eingeschoben ist.

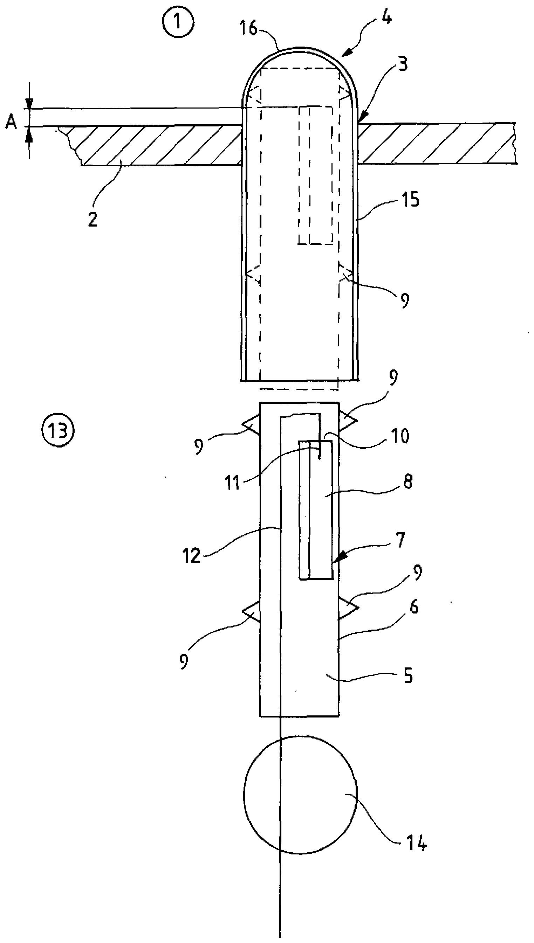

Ein Ausführungsbeispiel, aus dem sich weitere erfinderische Merkmale ergeben, ist in der Zeichnung dargestellt. Die Zeichnung zeigt eine Seitenansicht einer Wand eines Abgaskanals mit eingebautem Hochtemperatursensor im Schnitt.

Die einen Abgaskanal 1 begrenzende Wand 2, zum Beispiel die Metallwand einen Abgaskrümmers, weist einen Durchbruch 3 auf, in die ein Hochtemperatursensor 4 so eingesetzt ist, dass die Abgastemperatur im Abgaskanal 1 messbar ist.

Der Hochtemperatursensor umfasst ein Halteteil 5, das die Form eines Quaders aufweist und aus Polymerkeramik hergestellt ist. Die obere Längsseitenfläche des Halteteils 5, die hier mit 6 bezeichnet ist, weist eine taschenartige Einformung 7 auf, die eine Ausklinkung in der Längsseitenfläche 6 des als Quader vorliegenden Halteteils 5 ist.

In die Einformung 7 ist ein als rechteckförmiges Plättchen vorliegendes Sensorelement 8 bündig eingelegt. Sämtliche Längsseitenflächen des Halteteils 5 sind mit hier dreieckförmig dargestellten Abstandsnasen 9 ausgerüstet.

Aus der Stirnseite 10 des Sensorelementes 8 stehen Anschlussdrähte 11 vor, die mit seitlich an dem Halteteil vorbeilaufenden Kontaktdrähten 12 verbunden sind, wie es hier angedeutet ist. Die Kontaktdrähte, von denen hier lediglich der Kontaktdraht 12 sichtbar ist, verlaufen beiderseits des Halteteils 5 parallel in die mit 13 bezeichnete Umgebung des davon durch die Wand 2 separierten Abgaskanals 1.

Mit 14 ist ein kugelförmiger Distanzkörper bezeichnet, welcher verhindern soll, dass die Kontaktdrähte 12 ein die Einbaugruppe aus Distanzkörpern 14 und Halteteil mit Sensorelement aufnehmendes Gehäuse 15 berühren.

Ein solches Gehäuse 15 ist ein Bauteil des Hochtemperatursensors 4. Das Gehäuse weist die Form einer Hülse mit einem geschlossenen Hülsenende 16 auf.

Das als Hülse vorliegende Gehäuse 15 ist durch die Bohrung 3 in der Wand 2 geschoben. Mit gestrichelten Linien ist angedeutet, wie das Halteteil mit dem in seiner taschenartigen Einformung 7 aufgenommenen Sensorelement 8 in der eingeschobenen Position in dem Gehäuse 15 aufgenommen ist. Die Zeichnung verdeutlicht, dass in dieser aufgenommenen Position das Sensorelement 8 einen durch die Dimensionierung der Bauteile vorbestimmbaren Abstand A zu der den Abgaskanal 1 begrenzenden Wand 2 einnimmt. Durch die Abmessungen des Gehäuses und insbesondere des Halteteils mit seiner taschenartigen Einformung kann somit gewährleistet werden, dass das Sensorelement stets in seiner vorgesehenen Position positioniert und gehalten ist.

## Patentansprüche

1. Hochtemperatursensor mit einem Sensorelement und einer Vorrichtung zum Halten und Positionieren des Sensorelementes an seinem Einsatzort, insbesondere für automobile Anwendungen, mit einem Halteteil (5) mit einer taschenartigen Einformung (7), in der das Sensorelement (8) bündig aufgenommen ist und wobei die Einformung, bezogen auf die Längserstreckung des Halteteils (5), einseitig versetzt im Halteteil (5) angeordnet ist und mit einem umgebenden Gehäuse (15),
**dadurch gekennzeichnet,**
**dass** der Hochtemperatursensor Kontaktdrähte (12) und eine Reihe von Distanzhaltekörpern (14) aufweist,
**dass** die beiderseits der Einformung (7) verbleibenden Teilabschnitte des Halteteils (5) der Versetzung entsprechende Abmessungen aufweisen und als Distanzhalter ausgebildet sind, für die Vorgabe des Abstandes zwischen dem Sensorelement (8) und einem Wandbauteil einer den Einsatzort des Hochtemperatursensors begrenzenden Wand (2) einerseits und einem Distanzhaltekörper (14) der Reihe von Distanzhaltekörpern andererseits, welche von den Kontaktdrähten (12) gehalten sind und
**dass** aus dem mit dem Sensorelement (8) ausgerüsteten Halteteil (5), wobei das Sensorelement (8) mit den Kontaktdrähten (12) verbunden ist, und jeweils zugeordneten Distanzhaltekörpern (14), die von den Kontaktdrähten (12) gehalten sind, eine Einbaugruppe gebildet ist, die in das umgebendes Gehäuse (15) eingefügt ist.

2. Hochtemperatursensor nach Anspruch 1, **dadurch gekennzeichnet, dass** das Halteteil (5) die Form eines Quaders aufweist und dass die Einformung (7) eine Ausklinkung in einer der Längsseitenflächen (6) des Quaders ist.

3. Hochtemperatursensor nach einem der vorhergehenden Ansprüche, **dadurch gekennzeichnet, dass** das Sensorelement (8) abgehende parallele Anschlussdrähte (11) aufweist, deren freie Enden mit einem jeweils zugeordneten Kontaktdraht (12) verbunden sind, wobei der Abstand zwischen den Anschlussdrähten (11) größer ist als die Dicke des Halteteils (5) .

4. Hochtemperatursensor nach Anspruch 1, **dadurch gekennzeichnet, dass** das Gehäuse (15) die Form einer Hülse aufweist, die an einem Hülsenende (16) geschlossen ist.

5. Hochtemperatursensor nach einem der vorhergehenden Ansprüche, **dadurch gekennzeichnet, dass** der Werkstoff für das Halteteil (5) Polymerkeramik ist.

6. Hochtemperatursensor nach einem der Ansprüche 1 bis 5, **dadurch gekennzeichnet**, das Halteteil (5), Distanzhaltekörper (14) und Gehäuse (15) Spritzgussteile aus Polymerkeramik sind.

7. Hochtemperatursensor nach Anspruch 6, **dadurch gekennzeichnet, dass** das Halteteil (5) aus dem Angusskanal für einen in der jeweiligen Einbaugruppe benachbart angeordneten Distanzhaltekörper (14) gebildet ist.

8. Abgasstrang für einen Motor, insbesondere einen Verbrennungsmotor eines Automobils, mit einem Hochtemperatursensor nach einem der Ansprüche 1 bis 7, wobei der Hochtemperatursensor mit seinem Hülsenende (16) durch einen Durchbruch (3) der Wand (2) in den im Abgasstrang gebildeten Abgaskanal (1) eingeschoben ist,
**dadurch gekennzeichnet,**
**dass** das im Hochtemperatursensor vorgesehene Halteteil (5) mit dem darin aufgenommenen Sensorelement (8) an definierter Position in dem vorderen Teil des Hochtemperatursensors angeordnet ist, der in den Abgaskanal (1) eingeschoben ist.

## Claims

1. A high-temperature sensor with a sensor element and a device for holding and positioning the sensor element at the installation location thereof, particularly for automotive applications, having a holding part (5) with a pocket-like recess (7), in which the sensor element (8) is accommodated flush and the recess being arranged in the holding part (5) offset on one side with respect to the longitudinal extent of the holding part (5) and with a surrounding housing (15), **Characterized**
**in that** the high-temperature sensor has contact wires (12) and a series of spacer bodies (14),
**in that** the two portions of the holding part (5) remaining on both sides of the recess (7) have dimensions corresponding to the offset and are constructed as spacers, for specifying the distance between the sensor element (8) and a wall component of a wall (2) delimiting the use location of the high-temperature sensor on the one hand and a spacer body (14) of the series of spacer bodies on the other hand, which are held by the contact wires (12) and
**in that** a mounting assembly is formed from the holding part (5), which is equipped with the sensor element (8), wherein the sensor element (8) is connected to the contact wires (12), and respectively assigned spacer bodies (14), which are held by the contact wires (12), and the mounting assembly is inserted into the surrounding housing (15).

2. The high-temperature sensor according to Claim 1, **characterized in that** the holding part (5) has the shape of a cuboid and **in that** the recess (7) is a notch in one of the longitudinal side faces (6) of the cuboid.

3. The high-temperature sensor according to one of the preceding claims, **characterized in that** the sensor element (8) has outgoing parallel connection wires (11), the free ends of which are connected to a respectively assigned contact wire (12), wherein the distance between the connection wires (11) is larger than the thickness of the holding part (5).

4. The high-temperature sensor according to Claim 1, **characterized in that** the housing (15) has the shape of a sleeve, which is closed at one sleeve end (16).

5. The high-temperature sensor according to one of the preceding claims, **characterized in that** the material for the holding part (5) is polymer ceramic.

6. The high-temperature sensor according to one of Claims 1 to 5, **characterized in that** the holding part (5), spacer bodies (14) and housing (15) are injection-moulded parts made from polymer ceramic.

7. The high-temperature sensor according to Claim 6, **characterized in that** the holding part (5) is formed from the cast-on channel for an adjacently arranged spacer body (14) in the respective mounting assembly.

8. An exhaust system for an engine, particularly a combustion engine of an automobile, having a high-temperature sensor according to one of Claims 1 to 7, the sleeve end (16) of the high-temperature sensor being pushed into the exhaust-gas channel (1) formed in the exhaust system, through an opening (3) in the wall (2),
**characterized**
**in that** the holding part (5) provided in the high-temperature sensor is arranged with the sensor element (8) accommodated therein at a defined position in the front part of the high-temperature sensor, which is pushed into the exhaust-gas channel (1).

## Revendications

1. Capteur haute température avec un élément capteur et un dispositif destiné à retenir et à positionner l'élément capteur sur son lieu d'utilisation, notamment pour des applications automobiles, avec une pièce de retenue (5) avec une empreinte (7) en forme de poche, dans laquelle l'élément capteur (8) est reçu de manière affleurée, en rapport à l'extension longitudinale de la pièce de retenue (5), l'empreinte étant placée en étant décalée d'un côté dans la pièce de retenue (5) et avec un boîtier (15) enveloppant, **caractérisé**
**en ce que** le capteur haute température comporte des fils de contact (12) et une rangée de corps écarteurs (14),
**en ce que** les sections partielles de la pièce de retenue (5) restant de part et d'autre de l'empreinte (7) présentent des dimensions correspondant au décalage et sont conçues en tant qu'écarteurs, pour la prédéfinition de l'écart entre l'élément capteur (8) et un composant de paroi d'une paroi (2) qui délimite le lieu d'utilisation du capteur haute température d'une part et un corps écarteur (14) de la rangée de corps écarteurs d'autre part, lesquels sont maintenus par l'empreinte des fils de contact (12) et
**en ce que** par la pièce de retenue (5) équipée de l'élément capteur (8), l'élément capteur (8) étant connecté avec les fils de contact (12) et chaque fois des corps écarteurs (14) associés, qui sont maintenus par des fils de contact (12), il est formé un ensemble qui est inséré dans le boîtier (15) enveloppant.

2. Capteur haute température selon la revendication 1, **caractérisé en ce que** la pièce de retenue (5) a la forme d'un parallélépipède et **en ce que** l'empreinte (7) est une entaille dans l'une des surfaces de côté longitudinal (6) du parallélépipède.

3. Capteur haute température selon l'une quelconque des revendications précédentes, **caractérisé en ce que** l'élément capteur (8) comporte des fils de branchement (11) parallèles sortants, dont les extrémités libres sont connectées chacune sur un fil de contact (12) associé, l'écart entre les fils de branchement (11) étant supérieur à l'épaisseur de la pièce de retenue (5).

4. Capteur haute température selon la revendication 1, **caractérisé en ce que** le boîtier (15) a la forme d'une douille qui est fermée sur l'extrémité de la douille (16).

5. Capteur haute température selon l'une quelconque des revendications précédentes, caractérisé en ce la matière pour la pièce de retenue (5) est une céramique polymère.

6. Capteur haute température selon l'une quelconque des revendications 1 à 5, **caractérisé en ce que** la pièce de retenue (5), le corps écarteur (14) et le boîtier (15) sont des pièces moulées par injection en céramique polymère.

7. Capteur haute température selon la revendication 6, **caractérisé en ce que** la pièce de retenue (5) est formée par le point d'injection pour un corps écarteur (14) placé au voisinage dans l'ensemble concerné.

8. Circuit de gaz d'échappement pour un moteur, notamment pour un moteur thermique, avec un capteur haute température selon l'une quelconque des revendications 1 à 7, par son extrémité de douille (16), le capteur haute température étant emboîté dans un percement (3) de la paroi (2) dans le conduit de gaz d'échappement (1) formé dans le circuit de gaz d'échappement **caractérisé en ce que** la pièce de retenue (5) prévue dans le capteur haute température avec l'élément capteur (8) qui est reçu en son intérieur est placée en position définie dans la partie avant du capteur haute température qui est emboîté dans le conduit de gaz d'échappement (1).
